# EUROPÄISCHE PATENTSCHRIFT

(11) **EP 1 801 481 B1**
(45) Veröffentlichungstag und Bekanntmachung des Hinweises auf die Patenterteilung: **27.12.2017**
(21) Anmeldenummer: 06124845.6
(22) Anmeldetag: 27.11.2006
(51) Int. Cl.: E03C 1/122, F16L 5/04, F16L 5/12, F16L 55/10, F16L 21/03

(54) **Rohrverbinder für Abwasser-Abflussrohre**
Pipe connector for waste water outlet tube
Raccord de tuyau, pour tuyau de décharge d'eau usée

(30) Priorität: 22.12.2005 DE 202005020037 U
(43) Veröffentlichungstag der Anmeldung: 27.06.2007
(73) Patentinhaber: Saint Gobain HES GmbH, 51149 Köln (DE)
(72) Erfinder: Horn, Alfred, 50389 Wesseling (DE)
(74) Vertreter: dompatent von Kreisler Selting Werner - Partnerschaft von Patent- und Rechtsanwälten mbB

(56) Entgegenhaltungen:
- EP-A1- 1 143 184
- EP-A1- 1 512 434
- DE-U1- 29 921 841
- US-A- 5 634 304

## Beschreibung

Die Erfindung betrifft einen Rohrverbinder für Abwasser-Abflussrohre mit integriertem Brandschutz, mit einer aus Kunststoff bestehenden, im Inneren für Abwasser durchgängigen Muffe, in die zu verbindende Rohre einführbar sind, und einer mit der Muffe verbundenen Intumeszenzmasse.

Abflussrohre für Abwasser werden durch Decken und Wände von Gebäuden hindurchgeführt. Die Brandschutzvorschriften sehen vor, dass im Brandfall eine Übertragung von Feuer und Rauch vermieden wird und keine thermische Brücke zwischen den Stockwerken oder Räumen bilden dürfen. So darf im Brandfall ein Rohrstrang nicht eine Temperatur annehmen, die höher als 180 °C gegenüber der Umgebungstemperatur. Insbesondere in gusseisernen Abflussrohren, die durch eine Decke hindurchführen, besteht die Gefahr, dass im Brandfall hohe Temperaturen längs des Rohrstranges übertragen werden. Um dies zu vermeiden, wird der Rohrstrang über eine größere Länge mit einer thermischen Isolierung aus Mineralwolle umgeben. Eine derartige Isolierung, die in der Regel aus Schichten unterschiedlicher Härten besteht, ist aufwendig und teuer und erfordert eine schwierige Montage.

Der Oberbegriff des Anspruchs 1 geht aus von einem Rohrverbinder nach DE 200 20 786 U1. Dieser Rohrverbinder für Abwasserrohre weist eine Muffe auf, die eine äußere Manschette bildet, in welche die Rohrenden eingeführt werden. Die Muffe enthält eine Intumeszenzmasse, welche zwischen der umgebenden Muffenwand und einer in der Muffe enthaltenen rohrförmigen Dichtung eingeschlossen ist. Im Brandfall schmilzt die Dichtung und das Intumeszenzmaterial schwillt auf ein Vielfaches seines ursprünglichen Volumens an und dringt in den zwischen den Rohrenden gebildeten Spalt ein. Hierbei wird der Spalt zwischen den Rohrenden mit dem Intumeszenzmaterial verschlossen. Die Sollbruchstelle hat eine solche Breite, dass ein sicheres Eindringen der expandierenden Masse in die angrenzenden Rohre gewährleistet ist und ein hinreichend großflächiger Durchlass durch die geöffnete Sollbruchstelle zur Verfügung steht.

US 5,634,304 A beschreibt ein Durchgangsrohr für Gebäudewände oder Gebäudedecken, welches außenseitig mit einer Manschette aus einem Intumeszenzmaterial umgeben ist, welches die Rohrwand zerbricht und in das Rohr eindringt.

EP 1 143 184 A1 beschreibt eine Dichtungsmanschette aus einer Mischung aus einem gummielastischen Grundmaterial und einem intumeszierenden Material zum Verbinden zweier Rohre.

EP 1 512 434 A1 beschreibt ein Brandschutzelement mit einem in einer Decke angebrachten Rohrleitungsteil mit im Inneren angeordnetem Intumeszenzsmaterial.

DE 299 21 841 beschreibt einen Rohrverbinder mit einem in ein Muffenteil einsetzbaren Dichtelement.

Der erfindungsgemäße Rohrverbinder ist definiert durch die Merkmale von Patentanspruch 1.

Die Erfindung bietet den Vorteil, dass die Intumeszenzmasse sowohl auf der Außenseite als auch auf der Innenseite der Muffe wirksam ist, so dass ein Rohrdurchlass z. B. in einer Betondecke durch die expandierende Intumeszenzmasse vollständig verschlossen wird. Außer dem Rohrinneren wird auch der Rohrumfang umschlossen und Hohlräume, die durch Schmelzen des Materials entstehen, werden aufgefüllt.

Ein weiterer Vorteil besteht darin, dass das Brandschutzelement, nämlich die Intumeszenzmasse, nicht im Innern der Muffe liegt, wo sie der Gefahr von Beschädigungen durch das Abwasser sowie durch Rohrreinigung ausgesetzt wäre. Vielmehr ist das Brandschutzelement durch die Muffe von dem Rohrinnern getrennt.

Gemäß der Erfindung sind an den entgegengesetzten Enden der Muffe Dichtungen vorgesehen, die in die Muffe hineinragen und im Innern der Muffe jeweils eine Dichtlippe aufweisen. Hierbei sind zwei getrennte Dichtungen vorhanden, die die Enden der Muffe gegen das jeweilige Rohr abdichten. Eine sich über die gesamte Muffenlänge erstreckende Dichtung, die das Eindringen der Intumeszenzmasse in die Rohre behindern könnte, ist nicht vorhanden. Die Dichtung hintergreift einer Einschnürung am Ende der Muffe an entgegengesetzten Seiten. Dies bedeutet, dass die Dichtung um die Einschnürung herum gelegt ist und sowohl vom Innern der Muffe her an der Einschnürung anliegt als auch von der Außenseite her. Dadurch wird die Dichtung ohne sonstige Fixierung nur durch Formschluss an der Muffe festgehalten.

Die Sollbruchstelle der Muffe hat eine Länge von mindestens 30 mm, insbesondere von 30 - 50 mm. Abflussrohre, für die der Rohrverbinder bestimmt ist, haben in der Regel einen Außendurchmesser von 58 mm (DN 50) - 210 mm (DN 200).

Gemäß einer bevorzugten Weiterbildung der Erfindung ist die Intumeszenzmasse in einer zwischen erhabenen Randstreifen gebildeten Vertiefung der Muffe enthalten. Auf diese Weise entsteht ein einheitlicher Rohrverbinder, der das Brandschutzelement als ersten Bestandteil der Muffe enthält.

Im Folgenden wird ein Ausführungsbeispiel der Erfindung unter Bezugnahme auf die Zeichnungen näher erläutert.

Es zeigen:
- Fig. 1: Eine Seitenansicht einer Rohrverbindung unter Verwendung des erfindungsgemäßen Rohrverbinders,
- Fig. 2: einen Längsschnitt durch Fig. 1,
- Fig. 3: einen Längsschnitt durch eine Rohrdurchführung durch eine Decke und
- Fig. 4: die Rohrdurchführung nach Fig. 3 im Auslösefall der Brandschutzsicherung.

In den Zeichnungen ist ein Rohrverbinder 10 dargestellt, der zwei Rohre 11 und 12 miteinander verbindet. Bei den Rohren 11 und 12 handelt es sich insbesondere um gusseiserne Abflussrohre.

Der Rohrverbinder 10 enthält eine Muffe 13 aus starrem Kunststoff. Hierfür eignet sich beispielsweise Polypropylen. Die Muffe 13 ist ein Formkörper, der im Spritzgussverfahren hergestellt werden kann. Sie bildet ein generell rohrförmiges Bauteil, in das von beiden Enden her Rohre 11, 12 eingesteckt werden können. Die Muffe 13 weist einen rohrförmigen Mittelsteg 14 auf, der an den Enden durch ebenfalls ringförmige Seitenstege 15 begrenzt ist. Die Seitenstege 15 bilden in Verbindung mit dem Mittelsteg 14 eine Mulde, die von einer Intumeszenzmasse 16 ausgefüllt ist. Zu beiden Enden der Muffe 13 sind kegelstumpfförmige Randstreifen 17 gebildet, die jeweils in einer endseitigen Einschnürung 18 enden. Die Randstreifen 17 begrenzen Hohlräume, in denen jeweils eine ringförmige Dichtung 30 mit Dichtlippe 31 enthalten ist. Die Dichtung 30 umgibt die Einschnürung 18, so dass ein Teil der Dichtung an der Innenseite des Randstreifens 17 und ein anderer Teil an der Außenseite des Randstreifens anliegt. Auf diese Weise wird die Dichtung 30 durch Formschluss an der Muffe 13 festgehalten. Beim Einstecken des Rohres 11, 12 legt sich die Dichtlippe 31 abdichtend an die Rohraußenseite an.

Im Innern der Muffe 13 sind einander entgegengesetzte Anschläge 20, 21 vorgesehen zur Begrenzung des Einschiebens der Rohre 11 und 12. Die Anschläge 20, 21 haben einen gegenseitigen Abstand von etwa 30 - 50 mm, so dass die Enden der Rohre 11, 12 auf Abstand gehalten werden. Zwischen den Anschlägen 20, 21 erstreckt sich der Mittelsteg 14 der Muffe, der zugleich eine ringförmige Sollbruchstelle 22 bildet.

Im Brandfall schmilzt das relativ dünnwandige Material der Sollbruchstelle 22. Gleichzeitig expandiert die Intumeszenzmasse 16 z. B. auf das 15 bis 20fache ihres Anfangsvolumens. Dadurch dringt Intumeszenzmasse 16 in den zwischen den Rohren 11, 12 gebildeten Spalt, so dass die Rohrdurchlässe mit Intumeszenzmasse ausgefüllt werden. Gleichzeitig werden die Rohrenden außen mit Intumeszenzmasse umhüllt. Auf diese Weise werden die Rohre 11, 12 thermisch gegeneinander isoliert, so dass der Wärmeübergang von einem Rohr auf das andere erschwert wird.

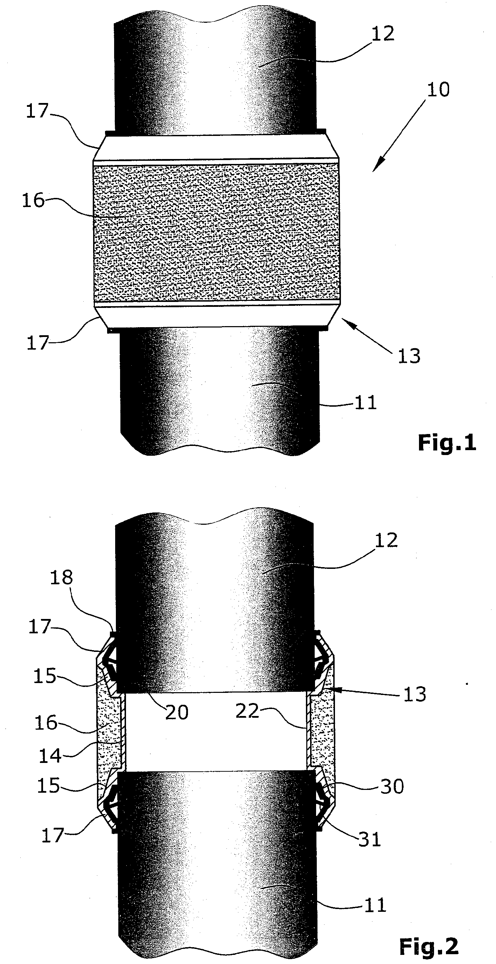

Wie Fig. 1 zeigt, füllt die Intumeszenzmasse 16 die zwischen den aufragenden Randstreifen 17 gebildete ringförmige Mulde vollständig aus, wobei sie bündig mit den Spitzen der Randstreifen 17 abschließt. Die Intumeszenzmasse 16 ist somit in die Muffe 13 eingebettet. Sie befindet sich gleichwohl auf der Außenseite der Muffe 13.

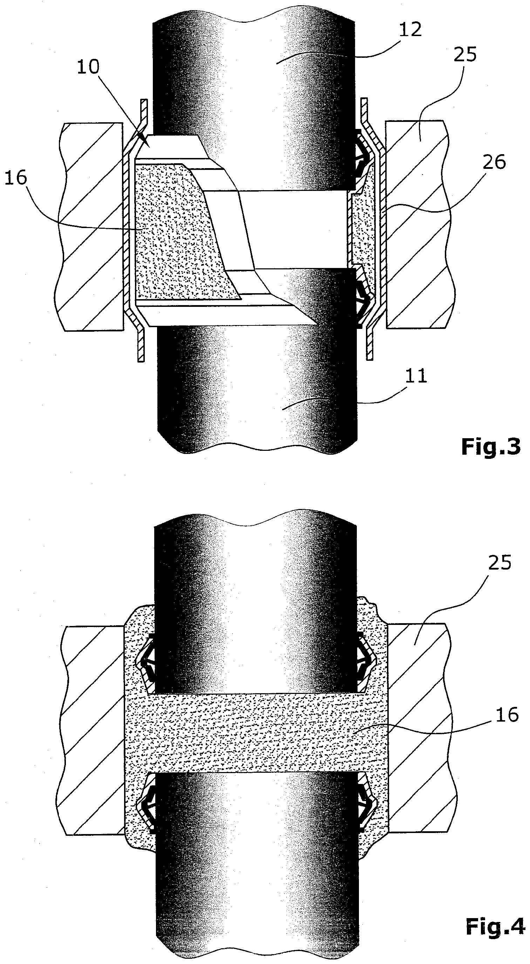

In den Figuren 3 und 4 ist ein Deckendurchgang dargestellt, wobei eine Betondecke mit 25 bezeichnet ist. Der Rohrverbinder 10 ist in der Betondecke 25 enthalten. Er ist von einem Schallschutzschlauch 26 mit einer Stärke von 5 - 10 mm umgeben, welcher die Schallübertragung zwischen den Rohren 11, 12 der Betondecke 25 dämpft. Im Brandfall, der in Fig. 4 dargestellt ist, schmilzt der Schlauch 26. Die Intumeszenzmasse 16 dringt dann nicht nur in den Spalt zwischen den Rohren 11, 12 ein, sondern füllt auch den Hohlraum, der durch das Abschmelzen des Schlauchs 26 entstanden ist. Auf diese Weise wird der gesamte Durchgang durch die Betondecke 25 thermisch abgedichtet.

## Patentansprüche

1. Rohrverbinder für Abwasser-Abflussrohre mit integriertem Brandschutz, mit einer aus Kunststoff bestehenden, im Inneren für Abwasser durchgängigen Muffe (13), in die die zu verbindenden Rohre (11, 12) einführbar sind, und einer mit der Muffe (13) verbundenen Intumeszenzmasse (16), wobei die Muffe einen rohrförmigen Mittelsteg (14) aufweist, der an den Enden durch ebenfalls ringförmige Seitenstege (15), die in Verbindung mit dem Mittelsteg (14) eine Mulde bilden, begrenzt ist, wobei die Intumeszenzmasse (16) auf der Außenseite der Muffe (13) angeordnet ist und in der Mulde enthalten ist, wobei die Muffe (13) zwischen zwei Anschlägen (20, 21) für die einzuführenden Rohre (11, 12) eine durch den Mittelsteg (14) gebildete Sollbruchstelle (22) aus derart dünnwandigem Material aufweist, dass die Sollbruchstelle im Brandfall schmilzt, wodurch die Intumeszenzmasse (16) zwischen die Rohrenden dringt, **dadurch gekennzeichnet, dass** an den entgegengesetzten Enden der Muffe (13) Dichtungen (30) vorgesehen sind, die in die Muffe (13) hineinragen und im Innern der Muffe jeweils eine Dichtlippe (31) aufweisen, wobei jede der Dichtungen (30) eine Einschnürung (18) am Ende der Muffe (13) von entgegengesetzten Seiten hintergreift.

2. Rohrverbinder nach Anspruch 1, **dadurch gekennzeichnet, dass** ein die Muffe (13) umgebender Schallschutzschlauch (26) vorgesehen ist.

3. Rohrverbinder nach Anspruch 1 oder 2, **dadurch gekennzeichnet, dass** die Sollbruchstelle (22) eine Länge von mindestens 30 mm aufweist.

4. Rohrverbinder nach einem der Ansprüche 1 - 3, **dadurch gekennzeichnet, dass** die Intumeszenzmasse (16) in einer zwischen erhabenen Randstreifen (17) gebildeten Vertiefung der Muffe (13) enthalten ist.

## Claims

1. Pipe connector for waste water outlet pipes with integrated fire protection, comprising a sleeve (13) of plastic material through which waste water can pass on the inner side and into which the pipes (11, 12) to be connected can be inserted, and an intumescent material (16) connected with the sleeve (13),
wherein the sleeve has a tubular central web (14) limited at the ends by lateral webs (15), also of tubular shape, which form a recess in connection with the central web (14),
wherein the intumescent material (16) is arranged on the outer side of the sleeve (13) and is contained in the recess,
wherein the sleeve (13) has a rated breaking point (22) between two stops (20, 21) for the pipes (11, 12) to be inserted, said rated breaking point being formed by the central web (14) and being of such a thin-walled material that the rated breaking point melts in case of a fire, whereby the intumescent mass (16) enters between the pipe ends,
**characterized in that**
seals (30) are provided at the opposing ends of the sleeve (13), which protrude into the sleeve (13) and each have a sealing lip (31), each of the seals (30) engaging behind a constriction (18) at the end of the sleeve (13) from opposite sides.

2. Pipe connector of claim 1, **characterized in that** a noise insulation hose (26) is provided that surrounds the sleeve (13).

3. Pipe connector of claim 1 or 2, **characterized in that** the rated breaking point (22) has a length of at least 30 mm.

4. Pipe connector of one of claims 1 - 3, **characterized in that** the intumescent material (16) is contained in a depression of the recess (13) formed between raised edge strips (17).

## Revendications

1. Raccord de tubes pour tubes d'évacuation des eaux usées avec protection anti-incendie intégrée, avec un manchon (13) perméable à l'intérieur aux eaux usées, composé de matière plastique, dans lequel les tubes (11, 12) à raccorder peuvent être introduits, et avec une masse intumescente (16) raccordée au manchon (13),
le manchon présentant une nervure centrale (14) de forme tubulaire qui est limitée aux extrémités par des nervures latérales (15) également de forme tubulaire qui forment une cuvette en liaison avec la nervure centrale (14),
la masse intumescente (16) étant disposée sur le côté extérieur du manchon (13) et étant contenue dans la cuvette,
le manchon (13) présentant, entre deux butées (20, 21) pour les tubes (11, 12) à introduire, un emplacement de rupture programmée (22) formé par la nervure centrale (14) en matériau à paroi mince tel que l'emplacement de rupture programmée fond en cas d'incendie, ce qui fait que la masse intumescente (16) pénètre entre les extrémités de tubes, **caractérisé en ce que**,
aux extrémités opposées du manchon (13), il est prévu des joints d'étanchéité (30) qui font saillie dans le manchon (13) et présentent à l'intérieur du manchon respectivement une lèvre d'étanchéité (31), chacun des joints d'étanchéité (30) agrippant par l'arrière, à partir de côtés opposés, un rétrécissement (18) à l'extrémité du manchon (13).

2. Raccord de tubes selon la revendication 1, **caractérisé en ce qu'**il est prévu un tuyau insonorisant (26) entourant le manchon (13).

3. Raccord de tubes selon la revendication 1 ou 2, **caractérisé en ce que** l'emplacement de rupture programmée (22) présente une longueur d'au moins 30 mm.

4. Raccord de tubes selon l'une des revendications 1 à 3, **caractérisé en ce que** la masse intumescente (16) est contenue dans une dépression du manchon (13) formée entre des bandes latérales (17) en relief.
